# EUROPÄISCHE PATENTANMELDUNG

(11) **EP 2 702 872 A2**
(43) Veröffentlichungstag der Anmeldung: **05.03.2014**
(21) Anmeldenummer: 13003073.7
(22) Anmeldetag: 15.06.2013
(51) Int. Cl.: A22C 11/00, A21C 9/08, B65G 15/16

(54) **Lebensmittelfördervorrichtung**

(30) Priorität: 28.08.2012 DE 202012008207 U
(71) Anmelder: WS-Anlagenbau GmbH, 33829 Borgholzhausen (DE)
(72) Erfinder: Schröter, Alexander, 33775 Versmold (DE)
(74) Vertreter: Schober, Mirko

(57) **Zusammenfassung**

Eine Lebensmittelfördervorrichtung zur Förderung von insbesondere strangförmigen, pastösen Lebensmitteln weist einen auf einem ersten Niveau liegenden Aufgabeabschnitt (2), einen auf einem zweiten Niveau liegenden, oberhalb oder unterhalb des Aufgabeabschnitts (2) angeordneten Entnahmeabschnitt (3) und eine zwischen Aufgabeabschnitt (2) und Entnahmeabschnitt (3) angeordnete Hubfördervorrichtung (1) auf. Die Hubfördervorrichtung (1) ist dazu ausgelegt, dass sie das geförderte Lebensmittel (4) über eine Hubförderstrecke (S) in einer Vorschubrichtung (X) bewegt und dabei das Lebensmittel vom ersten Niveau auf das zweite Niveau anhebt oder absenkt. Die Hubfördervorrichtung (1) weist einen unteren ersten Bandförderer (1a), dessen Obertrum (12a) zur Auflage einer Unterseite des zu fördernden Lebensmittels ausgelegt ist, und einen oberen zweiten Bandförderer (1b) auf. Dessen Untertrum (11b) weist dieselbe Laufrichtung (X) auf, wie der Obertrum (12a) des ersten Bandförderers (1a). Das Band des Untertrums (11b) des zweiten Bandförderers (1b) ist über zumindest einen Teil der Hubförderstrecke (S) so angeordnet, dass es durchhängt und das zu fördernde Lebensmittel berührt.

## Beschreibung

Die Erfindung betrifft eine Lebensmittelfördervorrichtung zur Förderung von insbesondere strangförmigen, pastösen Lebensmitteln, nach dem Oberbegriff von Anspruch 1.

In automatisierten, Lebensmittel verarbeitenden Anlagen werden die Lebensmittel über Fördervorrichtungen geleitet, um sie Bearbeitungsschritten zuzuführen oder zu einer Entnahmestelle zu führen. Aus Platzgründen oder anderweitig prozessbedingt kommt es dabei vor, dass bei der Förderung von Lebensmitteln innerhalb der Anlage auch Höhenunterschiede überwunden werden müssen. Im vorliegenden Fall geht es speziell um die Förderung von pastösen Massen von Lebensmitteln, die in Strangform vorliegen können, wie z.B. Fleisch- oder Fischmassen, und teilweise gefroren durch die Anlage transportiert werden müssen. Lebensmittel schließt auch Waren ein, die noch nicht verzehrfertig sind und durch einen Prozess erst in einen verzehrfertigen Zustand überführt werden.

Konventionell erfolgt das Anheben entweder händisch oder mit einer Hubvorrichtung. Ein schräg gestellter Bandförderer birgt die Gefahr, dass das beförderte Lebensmittel, das halbgefroren auf dem Förderband aufliegt, bei einer bestimmten Steigung zu rutschen beginnt, so dass eine Niveauverlagerung allenfalls mit sehr langen (und damit sehr platzgreifenden) und gering steigenden Hubförderstrecken möglich ist.

Aus EP 1 172 035 B1 ist ein Bandförderer bekannt, mit welchem sich Wurstketten von einem Niveau auf ein anderes überführen lassen. Die Wurstketten werden zwischen zwei Bandförderern in einem Aufgabeabschnitt und anschließend diagonal nach oben geführt. Damit die Wurstkette, die im Aufgabeabschnitt zu einem Block parallel liegender Würste kompaktiert wird, überhaupt in der Diagonalstrecke geführt werden kann, sind die Förderbänder so eingestellt, dass der Abstand zwischen dem oberen und unteren Förderbänder in der Diagonalstrecke gegenüber dem Abstand der Förderbänder am Aufgabeabschnitt vergrößert ist. Ein solches Vorgehen eignet sich nicht für die Beförderung pastöser oder (in Transportrichtung) stragförmiger Materialien. Denn die obigen Nachteile wären auch hier die Folge.

Aufgabe der vorliegenden Erfindung ist es daher, eine Lebensmittelfördervorrichtung der eingangs genannten Art anzugeben, die platzsparend und in der Lage ist, eine kontinuierliche Niveauverlagerung auch von strangförmigem, pastösem Material zu ermöglichen.

Gelöst wird diese Aufgabe durch eine Lebensmittelfördervorrichtung mit den Merkmalen des Anspruchs 1, vorteilhafte Ausführungsformen finden sich in den Unteransprüchen.

Erfindungsgemäß ist eine Hubfördervorrichtung vorgesehen, welche aus zwei Bandförderern besteht, einem ersten unteren Bandförderer und einem zweiten oberen Bandförderer. Zu beiden Seiten der Hubfördervorrichtung schließen sich ein Aufgabeabschnitt vor der Hubfördervorrichtung und ein Entnahmeabschnitt in Vorschubrichtung hinter der Hubfördervorrichtung an. Die beiden Bandförderer sind so angeordnet, dass das Fördergut, also das insbesondere pastöse und strangförmige Lebensmittel, zischen dem Untertrum des oberen Bandförderers und dem Obertrum des unteren Bandförderers aufgenommen wird. Der Untertrum des oberen Bandförderers ist hängend ausgestaltet, so dass er das Fördergut festhält und insbesondere seitlich wenigstens teilweise umschließt. Ohne Fördergut (Lebensmittel) ist insbesondere vorgesehen, dass der Untertrum des oberen Bandförderers auf dem Obertrum des unteren Bandförderers wenigstens abschnittweise oder auch durchgehend im Bereich der Hubförderstrecke aufliegt. Der Abstand der beiden Trume ist also in der Hubförderstrecke kleiner als im Bereich des Aufgabeabschnitts. So wird das Fördergut selbst bei hohen Niveauunterschieden zwischen Aufgabeabschnitt und Entnahmeabschnitt sicher festgehalten und über die Hubförderstrecke gefördert, ohne dabei zu verrutschen.

Die Bänder (Förderbänder) der Hubfördervorrichtung können sich auch bis auf die bevorzugt horizontal zur Aufstellfläche angeordneten Aufgabe- und Entnahmeabschnitte erstrecken. Genauso können diese Abschnitte separate Förderbänder aufweisen.

Besonders vorteilhaft ist es, wenn die beiden Bandförderer so synchronisiert sind, dass der Obertrum des unteren

Bandförderers und der Untertrum mit der gleichen Vorschubgeschwindigkeit laufen.

Der Abstand der beiden Bandförderer voneinander kann bevorzugt auf das Fördergut angepasst werden. Besonders vorteilhaft ist es dabei, wenn einer oder beide Bandförderer der Hubfördervorrichtung höhenverstellbar ausgebildet ist/sind. Die Hubfördervorrichtung kann zudem mit dem Aufgabeabschnitt und dem Entnahmeabschnitt durch Gelenke verbunden sein. Dadurch kann auch die Steigung der Hubfördervorrichtung variiert werden.

Die erfindungsgemäße Lebensmittelfördervorrichtung kann selbstreinigend ausgestaltet sein. Hierzu ist insbesondere vorgesehen, dass der Entnahmeabschnitt eine Abstreifvorrichtung zur Reinigung der Bänder der Bandförderer aufweist.

Die erfindungsgemäße Lebensmittelfördervorrichtung eignet sich durch die sich berührenden Trume des oberen und unteren Bandförderers insbesondere für die Verwendung zur Förderung von pastösem und/oder strangförmigem Fördergut, insbesondere von Lebensmitteln.

Die Erfindung wird nachfolgend anhand der Figuren 1 bis 4 näher erläutert.
- Figur 1 -: zeigt eine Seitenansicht der erfindungsgemäßen Lebensmittelfördervorrichtung,
- Figur 2 -: zeigt einen Schnitt entlang der Linie B-B durch die Lebensmittelfördervorrichtung aus Figur 1,
- Figur 3 -: zeigt eine Ausschnittvergrößerung der erfindungsgemäßen Lebensmittelfördervorrichtung im Bereich der Hubförderstrecke,
- Figur 4 -: zeigt eine schematische Darstellung der Förderbänder der erfindungsgemäßen Lebensmittelfördervorrichtung.

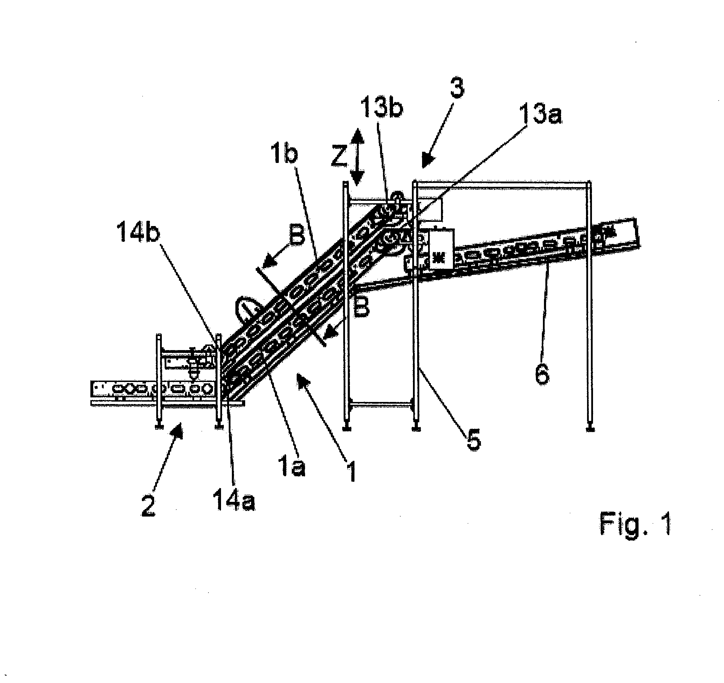

Die in der Figur 1 gezeigte Lebensmittelfördervorrichtung weist einen hier auf einem ersten (im gezeigten Beispiel unteren) Niveau liegende Aufgabeabschnitt 2 auf, in welchem die zu fördernden Lebensmittel (im Folgenden auch "Fördergut" genannt) zur Förderung in der angrenzenden Hubfördervorrichtung 1 aufgegeben werden. Im einfachsten Fall umfasst der Aufgabeabschnitt 2 ein Transportband, um das Fördergut zuzuführen. Weiter umfasst die erfindungsgemäße Vorrichtung einen auf einem vom ersten Niveau verschiedenen zweiten (im gezeigten Beispiel oberen Niveau liegenden) Entnahmeabschnitt 3, an welchem das Fördergut nach der Förderung durch die Hubfördervorrichtung 1 entnommen wird. Zur Weiterverarbeitung kann eine sich an den Entnahmeabschnitt 3 anschließende Fördervorrichtung 6 vorgesehen sein. Auch der Entnahmeabschnitt 3 selbst kann ein Transportband aufweisen.

Die Hubfördervorrichtung 1 weist einen ersten (unteren) Bandförderer 1a und einen zweiten (oberen) Bandförderer 1b auf, welche bevorzugt parallel zueinander angeordnet sind. Bevorzugt sind der erste Bandförderer 1a und der zweite Bandförderer 1b jeweils über Gelenke 13a, 14a bzw. 13b, 14b mit dem Entnahmeabschnitt 3 bzw. mit dem Aufgabeabschnitt 2 verbunden. Weiter ist die gezeigte Lebensmittelfördervorrichtung an einem Gestellrahmen 5 gelagert und kann in Vertikalrichtung Z in der Höhe verstellt werden. Bevorzugt sind alternativ oder ergänzend die einzelnen Bandförderer 1a, 1b relativ zueinander in Vertikalrichtung Z verstellbar, so dass der Abstand der Bänder voneinander variiert werden kann. Dazu können beide oder lediglich einer der beiden Bandförderer 1a, 1b am Gestellrahmen 5 höhenverstellbar ausgebildet sein.

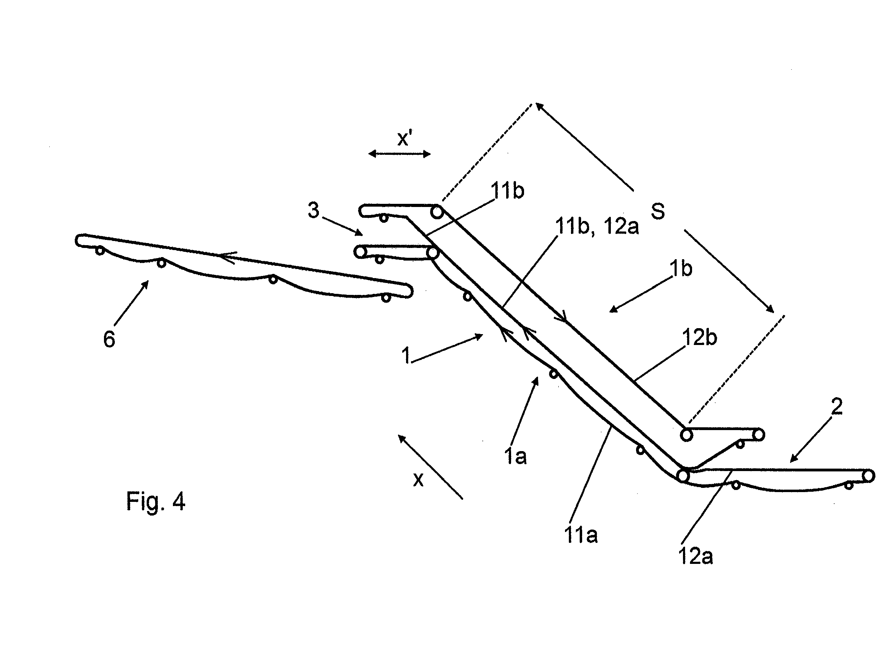

Die relative Anordnung der Transportbänder der Bandförderer 1a, 1b ist in Figur 4 dargestellt. Der erste (untere) Bandförderer 1a weist einen Untertrum 11a und einen Obertrum 12a auf. Der zweite (obere) Bandförderer 1b weist einen Obertrum 12b und einen dem Obertrum 12a des ersten Bandförderers 1a gegenüber liegenden Untertrum 11b auf. die Laufrichtungen der Bänder sind durch die Pfeile angedeutet, wobei der Obertrum 12a und der Untertrum 11b in der Förder- oder Vorschubrichtung X laufen, in der das Fördergut transportiert werden soll. Der schräg verlaufende Abschnitt S der Bandförderer 1a, 1b ist die Hubförderstrecke. Wie dargestellt, laufen die Transportbänder - zumindest deren Obertrume - außerhalb der Hubförderstrecke S in horizontaler Richtung X' weiter. Die gezeigte Anordnung ist so gewählt, dass der Untertrum 11b und der Obertrum 12a sich berühren, dazu hängt der Untertrum 11b durch, so dass er mehr oder weniger auf dem Obertrum 12a wenigstens abschnittweise aufliegt, sofern an dieser Stelle kein Fördergut vorhanden ist. Die Bänder 1a, 1b sind synchronisiert, so dass der Vorschub des Obertrums 12a und des Untertrums 11b jedenfalls entlang der Förderstrecke S gleich schnell erfolgt.

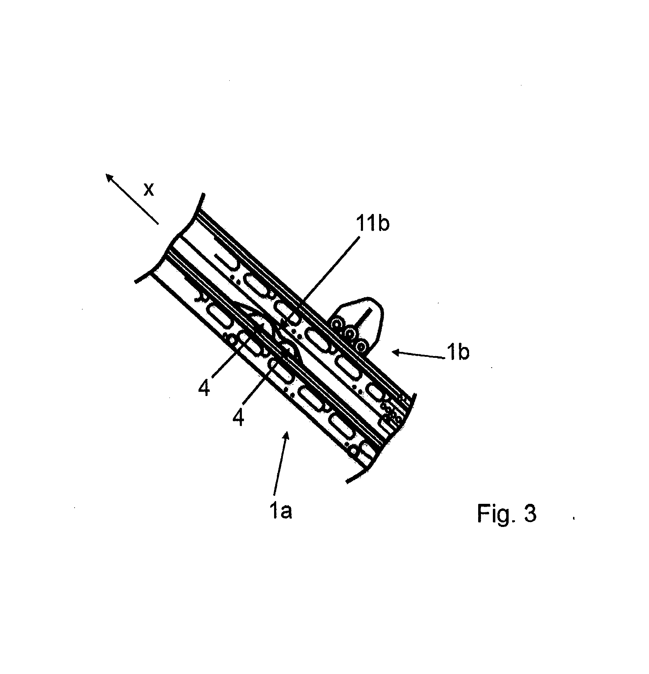

Gelangt das Fördergut vom Aufgabeabschnitt 2 in die Hubfördervorrichtung 1, so wird es vom Obertrum 12a in Vorschubrichtung X transportiert. Dabei legt sich der Untertrum 11b des zweiten Bandförderers 1b auf das Fördergut 4 und hält das Fördergut 4 (Lebensmittel) zwischen den beiden Trumen 12a, 11b fest, so dass es nicht die Steigung herunter gleiten kann. Wie in Figur 3 gezeigt, wird das Fördergut, wenn es sich um Stückgut handelt, vom auf dem Obertrum 12a liegenden Untertrum 11b festgehalten.

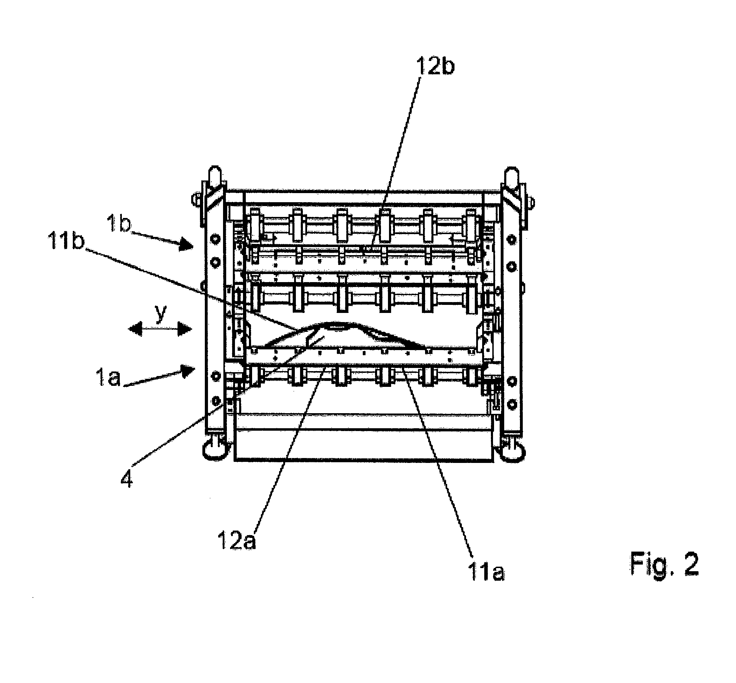

Auch strangförmige, pastöse Fördergüter 4 können transportiert werden, wie in Figur 2 gezeigt. Dort legt sich der Untertrum 11b mit seinen in Vorschubrichtung X seitlichen Rändern auf den Obertrum 12a, so dass der Strang des Fördergutes in seiner Querrichtung Y beidseits vom Untertrum 11b umgeben ist. Ein seitliches Verrutschen wird somit ebenfalls vermieden.

## Patentansprüche

1. Lebensmittelfördervorrichtung zur Förderung von insbesondere strangförmigen, pastösen Lebensmitteln, mit einem auf einem ersten Niveau liegenden Aufgabeabschnitt (2), einem auf einem zweiten Niveau liegenden, oberhalb oder unterhalb des Aufgabeabschnitts (2) angeordneten Entnahmeabschnitt (3) und einer zwischen Aufgabeabschnitt und Entnahmeabschnitt (3) angeordneten Hubfördervorrichtung (1), welche dazu ausgelegt ist, dass sie das geförderte Lebensmittel (4) über eine Hubförderstrecke (S) in einer Vorschubrichtung (X) bewegt und dabei das Lebensmittel vom ersten Niveau auf das zweite Niveau anhebt oder absenkt, wobei die Hubfördervorrichtung (1) einen unteren ersten Bandförderer (1a), dessen Obertrum (12a) zur Auflage einer Unterseite des zu fördernden Lebensmittels ausgelegt ist, und einen oberen zweiten Bandförderer (1b) aufweist, dessen Untertrum (11b) dieselbe Laufrichtung (X) aufweist wie der Obertrum (12a) des ersten Bandförderers (1a),
**dadurch gekennzeichnet,**
**dass** das Band des Untertrums (11b) des zweiten Bandförderers (1b) über zumindest einen Teil der Hubförderstrecke (S) so angeordnet ist, dass es durchhängt und das zu fördernde Lebensmittel berührt.

2. Lebensmittelfördervorrichtung nach Anspruch 1,
**dadurch gekennzeichnet,**
**dass** die in Vorschubrichtung (X) seitlichen Abschnitte des Untertrums (11b) des zweiten Bandförderers durchhängen und so das zu fördernde Lebensmittel wenigstens teilweise umschließen können.

3. Lebensmittelfördervorrichtung nach Anspruch 1 oder 2,
**dadurch gekennzeichnet,**
**dass** die Hubfördervorrichtung (1) mit dem Aufgabeabschnitt (2) und dem Entnahmeabschnitt (3) durch Gelenke verbunden sind.

4. Lebensmittelfördervorrichtung nach Anspruch 1, 2 oder 3,
**dadurch gekennzeichnet,**
**dass** einer oder beide Bandförderer (1a, 1b) der Hubfördervorrichtung (1) höhenverstellbar ausgebildet ist/sind.

5. Lebensmittelfördervorrichtung nach einem der vorigen Ansprüche,
**dadurch gekennzeichnet,**
**dass** die Bänder der Hubfördervorrichtung (1) sich auch auf den Aufgabeabschnitt (2) und den Entnahmeabschnitt (3) erstrecken.

6. Lebensmittelfördervorrichtung nach einem der vorigen Ansprüche,
**dadurch gekennzeichnet,**
**dass** der Aufgabeabschnitt (2) und/oder der Entnahmeabschnitt (3) eine etwa horizontal zum Aufstellboden verlaufende Förderstrecke aufweisen.

7. Lebensmittelfördervorrichtung nach einem der vorigen Ansprüche,
**dadurch gekennzeichnet,**
**dass** der Entnahmeabschnitt (3) eine Abstreifvorrichtung zur Reinigung der Bänder der Bandförderer (1a, 1b) aufweist.

8. Lebensmittelfördervorrichtung nach einem der vorigen Ansprüche,
**dadurch gekennzeichnet,**
**dass** im Bereich der Hubförderstrecke der Untertrum (11b) des zweiten Bandförderers (1b) und der Obertrum (12a) des ersten Bandförderers (1a) sich wenigstens abschnittweise berühren, wenn kein Lebensmittel (4) zwischen ihnen angeordnet ist.
